(19) Europäisches Patentamt
European Patent Office
Office européen des brevets

(11) **EP 2 596 555 B1**

(12) **FASCICULE DE BREVET EUROPEEN**

(45) Date de publication et mention
de la délivrance du brevet:
**04.03.2015 Bulletin 2015/10**

(21) Numéro de dépôt: **11733876.4**

(22) Date de dépôt: **19.07.2011**

(51) Int Cl.:
*H01S 3/10* (2006.01)      *H01S 3/06* (2006.01)
*H01S 3/0941* (2006.01)      *H01S 3/04* (2006.01)
*H01S 3/08* (2006.01)

(86) Numéro de dépôt international:
**PCT/EP2011/062385**

(87) Numéro de publication internationale:
**WO 2012/010610 (26.01.2012 Gazette 2012/04)**

(54) **DISPOSITIF D'AMPLIFICATION D'UN FAISCEAU LASER PERMETTANT DE SUPPRIMER LE LASAGE TRANSVERSE**

VORRICHTUNG ZUR VERSTÄRKUNG EINES LASERSTRAHLS MIT UNTERDRÜCKUNG VON TRANSVERSALER LASERTÄTIGKEIT

DEVICE FOR AMPLIFYING A LASER BEAM WITH SUPRESSION OF TRANSVERSE LASING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2010 FR 1003042**

(43) Date de publication de la demande:
**29.05.2013 Bulletin 2013/22**

(73) Titulaire: **THALES**
**92200 Neuilly-sur-Seine (FR)**

(72) Inventeurs:
• **BRANLY, Stéphane**
**F-91150 Brieres-les-scelles (FR)**
• **DERYCKE, Christophe**
**F-75001 Paris (FR)**
• **LAUX, Sébastien**
**F-91120 Palaiseau (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
FR-A1- 2 877 776      FR-A1- 2 901 067
US-A1- 2003 161 376

• **PATTERSON F G ET AL: "Suppression of parasitic lasing in large-aperture Ti:sapphire laser amplifiers", OPTICS LETTERS OPT. SOC. AMERICA USA, vol. 24, no. 14, 15 juillet 1999 (1999-07-15), pages 963-965, XP002629588, ISSN: 0146-9592**
• **ALDO ANTOGNINI ET AL: "Thin-Disk Yb:YAG Oscillator-Amplifier Laser, ASE, and Effective Yb:YAG Lifetime", IEEE JOURNAL OF QUANTUM ELECTRONICS, IEEE SERVICE CENTER, PISCATAWAY, NJ, USA, vol. 8, no. 8, 1 août 2009 (2009-08-01), pages 993-1005, XP011264011, ISSN: 0018-9197**
• **BONLIE J D ET AL: "Production of >10<21> W/cm<2> from a large-aperture Ti:sapphire laser system", APPLIED PHYSICS B (LASERS AND OPTICS) SPRINGER-VERLAG GERMANY, vol. B70, juin 2000 (2000-06), pages S155-S160, XP002629587, ISSN: 0946-2171**
• **GUCH S: "PARASITIC SUPPRESSION IN LARGE APERTURE DISK LASERS EMPLOYING LIQUID EDGE CLADDINGS", APPLIED OPTICS, OPTICAL SOCIETY OF AMERICA, WASHINGTON, DC; US, vol. 15, no. 6, 1 juin 1976 (1976-06-01), pages 1453-1457, XP002419100, ISSN: 0003-6935, DOI: 10.1364/AO.15.001453**

**Description**

Le domaine de l'invention est celui de l'amplification d'un faisceau laser et plus particulièrement celui des barreaux amplificateurs.

On rappelle brièvement le fonctionnement d'un dispositif d'amplification d'un faisceau laser. Il comprend principalement un milieu amplificateur et des sources de pompage qui injectent de l'énergie dans le milieu amplificateur. Ce milieu amplificateur qui a la forme d'un barreau peut être un cristal, ou encore un verre dopé. Ensuite, le faisceau laser à amplifier traverse le barreau amplificateur une ou plusieurs fois au moyen de dispositifs optiques à miroirs par exemple ; à chaque passage il extrait une partie de l'énergie injectée lors du pompage et est ainsi amplifié dans le barreau amplificateur. Pour un barreau amplificateur de forme cylindrique, l'énergie déposée lors d'un pompage est généralement confinée dans la partie centrale du barreau amplificateur, délimitée par le diamètre D du faisceau de pompe. Une partie de l'énergie déposée lors du pompage n'est pas convertie en énergie lumineuse mais en énergie thermique dans le milieu amplificateur ; cette énergie thermique doit être évacuée au moyen d'un dispositif de refroidissement (à base d'eau par exemple), qui devra être d'autant plus efficace que la puissance thermique (produit de l'énergie thermique par le taux de répétition des impulsions du laser) sera élevée.

Sur ce type de configuration de dispositif d'amplification de faisceau laser, un phénomène parasite appelé lasage transverse apparaît entre le dépôt d'énergie dans le barreau amplificateur par pompage optique et son extraction par le faisceau à amplifier.

Ce phénomène est lié à la création dans le barreau amplificateur d'une sous-cavité laser selon un axe transversal à l'axe longitudinal du barreau amplificateur, les ruptures d'indice de réfraction à l'interface barreau amplificateur-environnement assurant la fonction de miroirs de cette sous-cavité. Le lasage transverse s'établit lorsque la condition d'oscillation de cette sous-cavité est satisfaite, c'est-à-dire lorsqu'il y a conservation de l'énergie sur un aller-retour au sein de la sous-cavité, ou dit autrement lorsque le gain transverse G compense les pertes P de la sous-cavité.

Dans la suite on prend comme exemple de barreau amplificateur, un cristal ; on peut bien sûr le remplacer par du verre dopé.

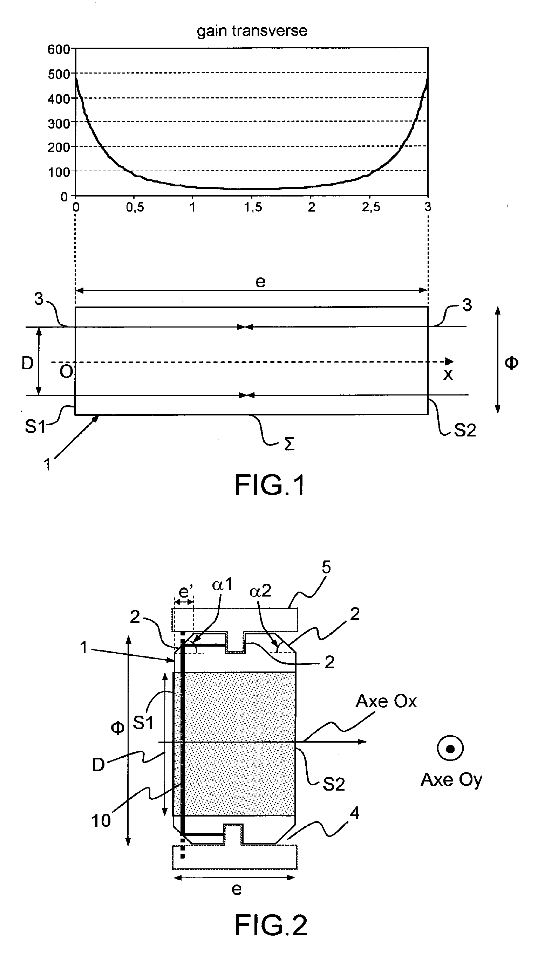

On a représenté figure 1 le gain optique G transverse dans un cristal amplificateur 1 cylindrique pompé selon l'axe longitudinal Ox du cristal, par ses deux faces S1, S2 par un faisceau laser de pompage 3 de diamètre D. Le laser de pompage est typiquement un laser solide ou un laser à fibre ou une diode laser. Si l'on désigne $g_0$ la densité linéaire de gain, le gain petit signal $g_{ps}$ est égal à $g_0.e$ dans la direction longitudinale Ox et à $g_0.D$ dans une direction transverse perpendiculaire à Ox. On a couramment D≥e (les échelles de grandeur ne sont pas respectées sur la figure afin de faciliter la lecture de la courbe de gain) ; la longueur e du cristal est typiquement comprise entre 2 et 5 cm, et le diamètre D entre 5 et 20 cm.

Le gain optique G étant proportionnel à $e^{g_{ps}}$, on a :

$$e^{g_0 \cdot D} >> e^{g_0 \cdot e}$$

Le gain optique G dans la direction transverse est donc beaucoup plus grand que le gain optique G dans la direction longitudinale, c'est-à-dire dans la direction du faisceau laser à amplifier.

Le lasage transverse se manifeste par un vidage brutal de l'énergie stockée dans le cristal, provoqué par des émissions stimulées transverses non contrôlées, aux dépens du faisceau laser que l'on veut amplifier.

Ce lasage transverse est particulièrement gênant dans le cas de milieux amplificateurs solides à forts gains et de grandes dimensions (typiquement un gain $g_0$ de 0.88 et un diamètre de pompe de 70mm). Il empêche par exemple de générer des impulsions laser femto secondes de puissance crête très importante, typiquement de l'ordre du petawatt, à partir d'un cristal TI : Saphir pompé à de fortes énergies de l'ordre de 100 J.

Jusqu'à aujourd'hui, le lasage parasite était supprimé en augmentant les pertes P pour le faisceau parasite en plaçant sur la périphérie du cristal un matériau absorbant à la longueur d'onde de fluorescence du cristal ; afin que le dispositif soit pleinement efficace il est de plus nécessaire que l'indice de réfraction du cristal et celui du matériau absorbant soient les plus proches possibles afin d'éviter une réflexion significative à l'interface cristal - matériau absorbant qui conduirait à l'établissement d'un lasage parasite. Ceci peut être par exemple réalisé au moyen d'un liquide absorbant dans lequel est immergée la surface Σ reliant les faces S1 et S2 du cristal. Cette solution est décrite dans la demande de brevet FR 2 901 067. Le liquide utilisé comprend un solvant dont l'indice de réfraction est proche de celui du cristal, et un colorant absorbant à la longueur d'onde de fluorescence du cristal. Le matériau utilisé peut être également un solide ainsi que décrit dans la publication « Production of >1021 W/cm2 from a large-aperture Ti :sapphire laser system » de JD Bonlie et al (Applied Physics B (Lasers and Optics)) springer-verlag germany, vol B70 juin 2000. D'autres solutions sont proposées dans la demande de brevet FR 2 877 776 A1 et dans la publication "Suppression of parasitic lasing in large-aperture Ti:sapphire laser amplifiers", de F.G.Patterson et al, Optics Letters, vol. 24, no. 14, 15 juillet 1999, pages 963-965.

Dans le cas d'un cristal amplificateur de TI : Saphir, l'indice de réfraction n est égal à 1,76. Pour augmenter les pertes à l'interface avec un liquide, celui du liquide utilisé doit être proche de celui du cristal ; les deux indices sont considérés comme proches si leur différence d'indice est inférieure ou égale à 0,01. Ce liquide vient se substituer à l'eau entourant habituellement le cristal, dont la fonction est d'évacuer la puissance thermique générée dans le cristal par le processus de pompage. Il doit donc également assurer cette fonction d'évacuation de la puissance thermique en plus de la fonction de suppression du lasage transverse ; or les propriétés thermiques et en premier lieu la capacité calorifique de ce type de liquides sont très en-deçà de celles de l'eau ce qui les rend inopérants dès lors que le taux de répétition du laser et par voie de conséquence la puissance thermique moyenne sont élevés, typiquement au-dessus de 1 Hz pour un amplificateur de forte énergie, c'est-à-dire supérieure à 30 Joule. Ce liquide est de plus très corrosif. Il est en outre cher et toxique et donc dangereux à utiliser ; il se dégrade dans le temps.

En conséquence, il demeure à ce jour un besoin pour un dispositif donnant simultanément satisfaction à l'ensemble des exigences précitées, en termes principalement de suppression du lasage transverse et d'évacuation de la puissance thermique moyenne pour des valeurs significatives de celles-ci (typiquement supérieures à 100 Watt) mais aussi de sécurité d'utilisation et de robustesse dans le temps.

La solution apportée par l'invention utilise une structure qui augmente significativement les pertes pour empêcher le lasage parasite par un autre moyen que l'égalisation des indices de réfraction ce qui permet un fonctionnement avec des moyens d'évacuation de la puissance thermique très performants, par exemple un refroidissement par eau. On utilise pour cela un cristal ou un assemblage de cristaux ayant une structure géométrique particulière qui permet d'augmenter le nombre d'interfaces et donc le nombre de réflexions aux interfaces, notamment au voisinage des faces S1 et S2 où le gain est particulièrement important, et un liquide absorbant ayant une capacité calorifique adaptée. Le nombre de réflexions additionnelles doit être suffisamment élevé (≥2) et/ou les coefficients de réflexion suffisamment faibles (≤0,1) pour que les pertes soient supérieures au gain.

Plus précisément l'invention a pour objet un dispositif d'amplification d'un faisceau laser tel que décrit dans la revendication 1.

De préférence, la surface $\Sigma$ comprend une deuxième dent à deux faces, la face orientée vers la première dent étant inclinée selon un angle $\beta1$ par rapport à l'axe Ox, $\alpha1$ et $\beta1$ étant tels que les photons se propageant parallèlement à la face à gain maximal et réfléchis avec des pertes importantes (c'est-à-dire avec un coefficient de réflexion ≤ 0,1) par la première dent arrivent perpendiculairement sur cette face de la deuxième dent.

Selon une caractéristique de l'invention, le milieu à gain présente un autre maximum le long de l'autre face de la structure du barreau amplificateur ; la surface $\Sigma$ présente alors une troisième dent sous forme d'un autre chanfrein sur tout ou partie de sa jonction avec cette autre face à gain maximal et sur une longueur e2' repérée selon l'axe Ox, e2' étant supérieure à la longueur seuil prédéterminée, cet autre chanfrein étant orienté selon un angle $\alpha2$ par rapport à Ox, la deuxième face de la deuxième dent (orientée vers cette troisième dent) étant inclinée selon un angle $\beta2$ par rapport à l'axe Ox, $\alpha2$ et $\beta2$ étant tels que les photons se propageant parallèlement à cette autre face à gain maximal et réfléchis par la troisième dent arrivent perpendiculairement sur cette face.

Le liquide d'indice $n_A$ est par exemple un liquide dans lequel est immergée une densité absorbante à la longueur d'onde de fluorescence $\lambda$ de la structure du barreau amplificateur.

La longueur seuil est avantageusement prédéterminée en fonction du gain optique.

Selon une autre caractéristique de l'invention, l'angle $\alpha1$ et/ou l'angle $\alpha2$ permettent d'éviter la réflexion totale ; ils sont tels que

$$\sin\alpha1 < n_A/n_c \text{ et } \sin\alpha2 < n_A/n_c.$$

On a typiquement :

e1'=e2', $\alpha1=\alpha2$, $\beta1=\beta2$.

Selon un premier mode de réalisation de l'invention, les faces d'entrée et de sortie sont circulaires et la (ou les) dent(s) présente(nt) une symétrie de révolution selon l'axe Ox.

Selon une variante de réalisation, la (ou les) dent(s) est (sont) réalisée(s) sur deux parties opposées de la surface $\Sigma$.

Selon un deuxième mode de réalisation de l'invention, les faces d'entrée et de sortie sont rectangulaires et la (ou les) dent(s) est (sont) réalisée(s) sur deux parties de la surface $\Sigma$, situées selon deux côtés opposés du rectangle.

La structure de barreau amplificateur peut être du cristal ou du verre dopé.

La structure du barreau amplificateur peut ne comporter qu'un cristal ou qu'un verre dopé. Elle peut aussi comporter un (ou plusieurs) cristal (cristaux) ou verre(s) dopé(s) muni(s) chacun d'une (ou plusieurs) dent(s).

L'invention a aussi pour objet un procédé d'utilisation d'un dispositif d'amplification d'un faisceau laser tel que décrit, caractérisé en ce qu'il comprend une étape de pompage du dispositif, et en ce que ce pompage induit une puissance thermique supérieure à 100 Watt moyens.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un exemple de cristal amplificateur pompé par un faisceau de pompage, et un exemple de gain optique G correspondant,

la figure 2 représente schématiquement un exemple de dispositif d'amplification selon l'invention, avec trois dents, vu en coupe selon l'axe Ox,

la figure 3 représente schématiquement les pertes R d'un exemple de structure de cristal amplificateur à trois dents,

la figure 4 représente schématiquement le produit G x R du même exemple de structure de cristal amplificateur à trois dents,

la figure 5 représente schématiquement un exemple de structure de cristal à un seul cristal, avec trois dents, vu en perspective,

la figure 6 représente schématiquement en éclaté, un exemple de structure de cristal avec un assemblage de trois cristaux, et trois dents, vu en perspective.

D'une figure à l'autre, les mêmes éléments sont repérés par les mêmes références.

Dans la suite on prend comme exemple un barreau amplificateur en cristal. On peut le remplacer par du verre dopé tel que par exemple du verre phosphate ou du verre silicate dopé par des ions Neodyme ou des ions Ytterbium.

La figure 2 montre une structure de cristal 1 à un seul cristal, dont la géométrie est modifiée en ajoutant des « dents » 2 à la surface $\Sigma$, qui sont autant de nouvelles interfaces sur lesquelles les photons sont en partie réfléchis, l'autre partie étant absorbée ou diffusée.

L'angle $\alpha$ de chaque dent par rapport à l'axe Ox est optimisé pour éviter une réflexion totale à l'intérieur du cristal, puisque le but est qu'une partie des photons soit transmise. On veut donc :

$$\sin(\alpha) < n_A/n_c, \text{ avec } n_A < n_c$$

$n_c$ étant l'indice du cristal, $n_A$ l'indice du liquide A formant avec le cristal cette interface.

Pour cela, il est possible de modifier l'angle $\alpha$ et/ou l'indice $n_A$.

Il faut en outre que les photons transmis ne reviennent pas : il faut donc qu'ils soient absorbés ou diffusés par ce liquide A qui est donc un liquide absorbant ou diffusant pour la ou les longueur(s) d'onde de fluorescence du cristal. La surface $\Sigma$ est alors immergée dans ce liquide absorbant A ; de manière classique ce liquide absorbant est contenu dans un réservoir qui entoure de manière étanche cette surface $\Sigma$.

Dans le cas d'un cristal de TI : Saphir, les longueur(s) d'onde sont voisines de 800 nm. Deux cas sont possibles :

1. Le liquide A est un liquide homogène absorbant ou diffusant, qui entoure la surface $\Sigma$.

2. Si le liquide A est uniquement un liquide d'adaptation d'indice, une densité absorbante ou un diffuseur est alors immergé dans ce liquide. Dans ce cas la densité ou diffuseur fait face à la surface $\Sigma$ (la densité est par exemple une lame sous forme d'un anneau situé dans le plan (Oy,Oz) qui est perpendiculaire à l'axe Ox) ; elle ou il peut entourer $\Sigma$ mais pas nécessairement.

Ce liquide A peut être un liquide d'indice absorbant ou diffusant ; il existe de tels liquides dont l'indice $n_A$ peut être proche de $n_c$ qui sont utilisables si la puissance thermique à évacuer est faible (cas des faibles taux de répétition des impulsions laser, jusqu'à 1 Hz maximum): il s'agit par exemple du mélange d'un liquide d'adaptation d'indice avec un colorant, absorbant à la longueur d'onde de fluorescence du cristal ou d'un liquide d'adaptation d'indice dans lequel est immergé une densité ou un diffuseur comme indiqué précédemment. Un tel liquide est cependant très corrosif et se dégrade avec le temps. Mais plus $n_A$ est différent de $n_c$, plus la réflexion augmente.

Lorsque la puissance thermique à évacuer induite par le pompage, est importante (supérieure à 100 Watt moyens), on utilise un liquide non absorbant 4 ayant de bonnes propriétés d'évacuation de la puissance thermique, désigné liquide d'indice, dont l'indice de réfraction est plus proche de celui du cristal que s'il s'agissait de l'air (dont l'indice est égal à 1) afin de réduire la réflexion mais dans lequel est immergé un élément absorbant ou diffusant désigné densité 5. Cette densité est typiquement une densité neutre ou un verre absorbant ou un empilement de densités, de verres absorbants ou des deux. Le liquide d'indice 4 a alors une fonction d'adaptation entre le cristal 1 et la densité 5. L'eau permettant un refroidissement efficace, on choisit de préférence comme liquide absorbant de l'eau colorée ou de l'eau dans laquelle est immergée une densité. Ce liquide est par exemple de l'eau dont l'indice est égal à 1,33 ou un mélange eau - éthylène glycol dont l'indice est de 1,38.

Au final, tous les photons transmis aux interfaces sont absorbés ou diffusés par la densité 5 ou le liquide absorbant ou diffusant dont les spectres d'absorption couvrent le spectre de fluorescence du cristal.

Grâce à la géométrie du cristal qui introduit des pertes importantes pour le faisceau parasite, on peut s'affranchir d'utiliser un liquide permettant une adaptation d'indice quasi parfaite, mais qui n'est pas compatible avec un fonctionnement à charge thermique élevée. On utilise donc un liquide dont la capacité calorifique permet d'évacuer de manière performante la chaleur déposée pendant le pompage, même s'il ne permet qu'une adaptation d'indice partielle (avec un écart entre les indices de réfraction de l'ordre de 0,3). La géométrie du cristal permet de découpler la fonction refroidissement et adaptation d'indice d'une part, de la fonction absorption d'autre part.

Le gain linéique $g_0$ augmente en fonction du dopage du cristal et comme on l'a vu dans le préambule, le gain optique G selon l'axe Ox augmente en fonction de l'épaisseur e du cristal et de son gain linéique.

Le nombre de dents 2 est donc calculé en fonction du dopage du cristal 1 : on ajoute autant de dents que nécessaire pour éviter un effet laser parallèle aux faces S1 et S2 du cristal et proche de celles-ci, c'est-à-dire là où le gain optique G est particulièrement fort.

La sous-cavité transverse susceptible de provoquer un lasage transverse est située au voisinage d'une face S1 si le cristal 1 n'est pompé que par cette face S1. Une deuxième sous-cavité transverse susceptible de provoquer un lasage transverse est située au voisinage de l'autre face S2 si le cristal est aussi pompé par cette face S2.

Le gain étant maximal au niveau d'une face S, on taille le cristal de manière à ce qu'il présente une première dent 2 sous la forme d'un chanfrein à la jonction de la surface $\Sigma$ et de cette face où le gain est maximal, ce chanfrein étant incliné d'un angle $\alpha$ sur l'axe Ox, l'inclinaison étant de préférence orientée vers l'extérieur du cristal. On a typiquement $\alpha$ compris entre 30 degrés et 50 degrés. La longueur du chanfrein est telle que sa projection e' sur Ox couvre au moins une longueur $L_{Gseuil}$ où le gain optique est susceptible de contribuer à un lasage transverse, c'est-à-dire lorsqu'il dépasse un seuil prédéterminé : $G > G_{seuil}$. Comme $G_{seuil}$ est proportionnel à $e^{g0.LGseuil}$, on a alors $e' \geq L_{Gseuil}$. On a typiquement e' compris entre e/20 et e/6. S'il y a un chanfrein d'un seul coté il est préférable de prévoir un moyen pour que les photons ne retournent pas dans la zone de gain ; on prévoit des moyens d'absorption. On peut par exemple disposer un milieu absorbant (en forme de L), qui forme un retour pour venir couvrir en partie l'autre face.

On considère à présent le cas où le gain est maximal sur les deux faces et on désigne par $\alpha$1 et e1' les caractéristiques du chanfrein de la face S1 (la première dent). On prévoie une autre dent 2 (dite troisième dent par la suite) sous la forme d'un deuxième chanfrein à la jonction de la surface $\Sigma$ et de l'autre face S2, ce chanfrein étant incliné vers l'extérieur du cristal d'un angle $\alpha$2 et ayant une projection e2' sur Ox avec e2' $\geq L_{gseuil}$.

On désigne ces dents selon l'axe Ox : une première dent à la jonction avec S1, une encoche dite deuxième dent décrite ci-dessous et une troisième dent à la jonction avec S2.

On prévoie aussi de préférence encore une deuxième dent 2 à deux faces inclinées, aussi désignée encoche, située entre les première et troisième dents précédemment décrites (les deux chanfreins). L'angle $\alpha$1 de la première dent est tel que les photons 10 se propageant parallèlement à la face à gain maximal S1 et réfléchis par le premier chanfrein arrivent perpendiculairement sur la première face de cette deuxième dent (ou encoche), elle-même inclinée selon un angle à 90° par rapport à l'angle d'incidence des photons sur cette face. De cette façon les photons feront à partir de ce deuxième dioptre un trajet retour dans le sens opposé du trajet aller de manière à ne pas atteindre la deuxième face où le gain est de nouveau maximal. Cette première face de cette deuxième dent (ou encoche) 2 est plus généralement inclinée d'un angle $\beta$1 par rapport à l'axe Ox tel que :

$$\beta 1 = \pi - 2\alpha 1$$

Pour les mêmes raisons, la deuxième face de cette encoche est inclinée d'un angle $\beta$2 tel que :

$$\beta 2 = \pi - 2\alpha 2.$$

La longueur selon Ox de cette encoche est typiquement supérieure ou égale à la moitié de la longueur totale du cristal.

Selon une alternative cette encoche peut être divisée en deux dents :

- l'une proche du chanfrein de S1 avec une face inclinée à $\beta$1 (celle qui est orientée vers S1), sans contrainte d'inclinaison pour l'autre face,
- l'autre proche du chanfrein de S2 avec une face inclinée à $\beta$2 (celle qui est orientée vers S2), sans contrainte d'inclinaison pour l'autre face.

On a typiquement trois dents comme représenté sur la figure 2, une première dent à la jonction avec S1, une encoche dite deuxième dent et une troisième dent à la jonction avec S2 avec :

$$\alpha 1 = \alpha 2 = \pi/4, \ \beta 1 = \beta 2 = \pi/2.$$

Cette encoche ou deuxième dent peut aussi être prévue même en l'absence de gain maximal sur la deuxième face et donc en l'absence de « troisième » dent à la jonction de $\Sigma$ et de S2. Dans ce cas, il n'y a plus de contrainte sur $\beta$2.

Si on considère d'une part que la première dent génère un dioptre de coefficient de réflexion R1, et la deuxième dent (ou encoche), un dioptre de coefficient de réflexion R2 qui renvoie les photons dans la même direction mais dans le sens opposé, et que d'autre part E est l'énergie des photons incidents sur la première dent, les photons ont alors une énergie E' après leur trajet retour sur les deux dioptres, E' étant proportionnel à E x R2 x R1[2].

Pour diminuer les coefficients de réflexion, la surface E peut en outre être dépolie.

Pour un cristal sensiblement cylindrique (c'est-à-dire aux dents près) à section circulaire, les dents 2 à la surface $\Sigma$ peuvent être elles-mêmes à symétrie de révolution autour de Ox. C'est le cas par exemple pour un cristal Nd :Yag pour lequel le gain optique G est également à symétrie de révolution.

Pour d'autres cristaux comme TI :Saphir, le gain est maximal selon un diamètre D spécifique dont l'orientation est déterminée à partir des axes cristallographiques du cristal.

Pour un cristal sensiblement cylindrique (c'est-à-dire aux dents près) à section rectangulaire, la surface E présente alors quatre côtés correspondant respectivement aux côtés du rectangle. Les dents 2 sont alors présentes de préférence sur deux côtés opposés parallèles qui sont les côtés où le gain est maximal.

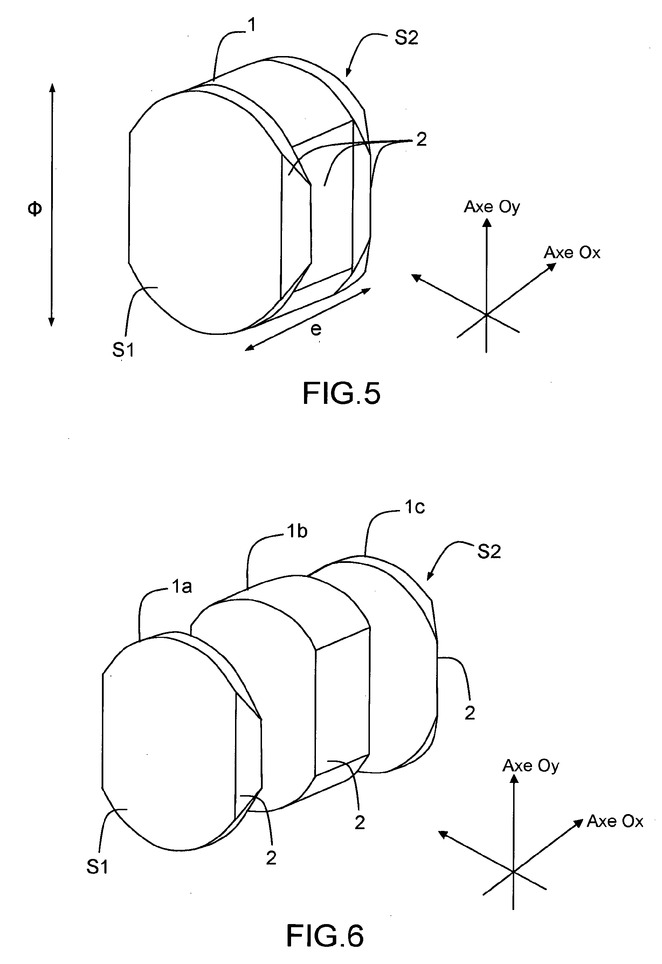

On a représenté figure 5 une structure à un seul cristal 1 dont la face S1 présente une première dent sur deux parties opposées de S1 et dont l'axe du chanfrein est selon Oy, la face S2 présente une troisième dent de même forme que la première dent mais d'inclinaison opposée. Ce cristal comporte aussi une encoche (ou deuxième dent) également en deux parties et dont la largeur selon Ox couvre la distance entre les première et troisième dents.

La figure 6 montre une structure de cristal à trois cristaux, présentant la même géométrie que la structure de la figure 5 avec un premier cristal 1 a pour la première dent, un deuxième cristal 1 b pour la deuxième dent et un troisième cristal 1 c pour la troisième dent.

On a obtenu les résultats suivants pour une structure de cristal amplificateur 1 à un seul cristal tel que représenté figure 2. Il s'agit plus précisément d'un cristal 1 de TI : Saphir de 30mm d'épaisseur e, à section circulaire de diamètre $\Phi$ de 80mm (avant de réaliser les dents) dont les faces S1 et S2 présentent un chanfrein à 45°, de projection e' de 5mm à la jonction de E avec chaque face ($\alpha 1 = \alpha 2 = 45°$ et e1'=e2'=e'= 5 mm), (soit une première et une troisième dent), et une deuxième dent 2 située entre les deux chanfreins et dont les faces sont orientées à 90 ° et de longueur 15 mm selon Ox. Le coefficient d'absorption du faisceau laser de pompage est de $0.84cm^{-1}$ à 532nm soit une absorption de l'énergie de pompe sur l'axe de propagation du faisceau laser de pompage en un passage de 98%. Le gain optique transverse obtenu le long de cet axe de propagation du faisceau laser de pompage Ox a été présenté figure 1 et correspond à un pompage par les deux faces avec une Fluence de 1.46J/cm2. La fluence de saturation du faisceau laser à amplifier dans ce cristal, à 800 nm est estimée à 1.1 J/cm2. Le diamètre D du faisceau de pompage est de 70mm. Les pertes aux interfaces pour l'effet laser parallèle aux faces ont été calculées avec $R1^2 = 0,04$ et R2 = 0,02. La proportion d'énergie réinjectée R dans la cavité après un aller-retour des photons, égale à :

$$R = R2 \times R1^2,$$

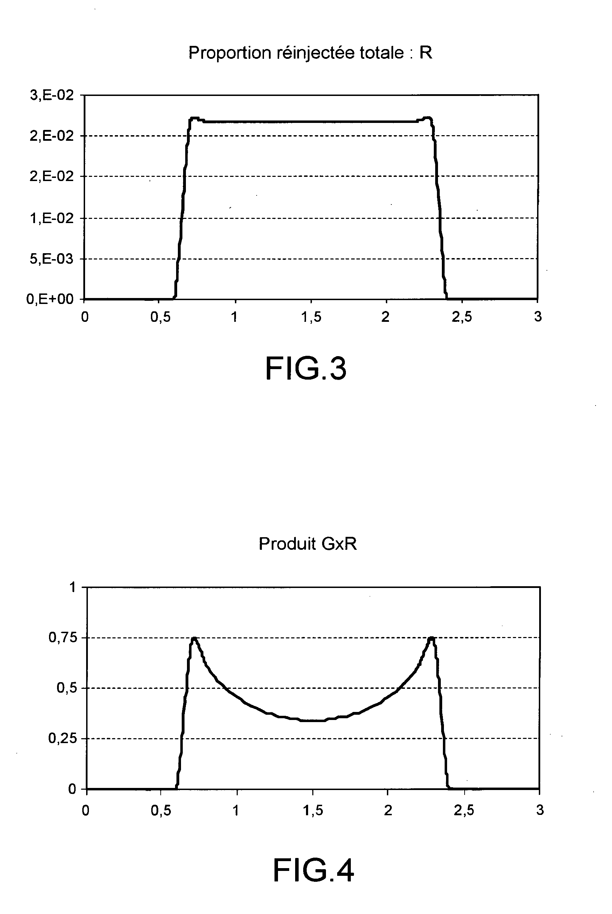

est représentée figure 3.

Pour éviter l'effet laser transverse, il faut que le produit du gain par la proportion d'énergie réinjectée GxR soit inférieur à 1. La figure 4 montre que grâce à ces trois dents, le produit GxR est inférieur à 0.75.

## Revendications

1. Dispositif d'amplification d'un faisceau laser selon un axe Ox, qui comprend :

   - une structure de barreau amplificateur (1) d'indice $n_c$, de longueur d'onde de fluorescence $\lambda$, délimitée par une surface $\sum$ reliant les faces d'entrée S1 et de sortie S2 de la structure de barreau amplificateur, et ayant une dimension e selon la direction Ox comprise entre 2 cm et 5 cm, et une dimension $\Phi$ selon une direction du plan Oyz perpendiculaire à Ox, avec e< $\Phi$, et destinée à être pompée selon l'axe Ox pour devenir un milieu à gain de diamètre D centré sur l'axe Ox, le gain optique présentant un maximum le long d'une face S1 ou S2 de la structure de barreau amplificateur, dite face à gain maximal, et
   - un liquide (4) d'indice $n_A$ qui entoure la structure de barreau amplificateur (1) selon sa surface $\sum$, ce liquide étant de l'eau ou un mélange eau-éthylène glycol,

   **caractérisé en ce que** la surface E comporte une première dent (2) sous la forme d'un chanfrein sur tout ou partie de sa jonction avec la face à gain maximal, orienté selon un angle $\alpha 1$ par rapport à Ox compris entre 30° et 50°, et ayant une longueur e1' repérée selon l'axe Ox, e1' étant supérieure à une longueur seuil prédéterminée et inférieure à e/6, de manière à éviter de provoquer un lasage transverse parasite, **en ce que** le liquide (4) d'indice $n_A$ a une capacité calorifique supérieure à 3000 Joule par kilogramme par degré Kelvin de manière à dissiper la puissance thermique induite par le pompage, **en ce que** l'écart entre $n_A$ et $n_c$ est de l'ordre de 0,3, pouvant atteindre 0,43, et **en ce qu'**une densité (5) absorbante à la longueur d'onde de fluorescence $\lambda$ de la structure de barreau amplificateur, et/ou un élément absorbant à cette longueur d'onde, est immergé dans le liquide.

2. Dispositif d'amplification d'un faisceau laser selon la revendication précédente, **caractérisé en ce que** la surface $\sum$ comprend une deuxième dent (2) à deux faces, la face orientée vers la première dent étant inclinée selon un angle $\beta 1$ par rapport à l'axe Ox, $\alpha 1$ et $\beta 1$ étant tels que les photons se propageant parallèlement à la face à gain maximal et réfléchis par la première dent (2) arrivent perpendiculairement sur cette face de la deuxième dent.

3. Dispositif d'amplification d'un faisceau laser selon la revendication précédente, **caractérisé en ce que** le milieu à gain présente un autre maximum le long de l'autre face de la structure de barreau amplificateur et **en ce que** la surface $\Sigma$ présente une troisième dent (2) sous forme d'un autre chanfrein sur tout ou partie de sa jonction avec cette autre face à gain maximal et sur une longueur e2' repérée selon l'axe Ox, e2' étant supérieure à la longueur seuil prédéterminée, cet autre chanfrein étant orienté selon un angle $\alpha2$ par rapport à Ox, la deuxième face de la deuxième dent étant inclinée selon un angle $\beta2$ par rapport à l'axe Ox, $\alpha2$ et $\beta2$ étant tels que les photons se propageant parallèlement à cette autre face à gain maximal et réfléchis par la troisième dent arrivent perpendiculairement sur cette face.

4. Dispositif d'amplification d'un faisceau laser selon l'une des revendications précédentes, **caractérisé en ce que** la longueur seuil est déterminée en fonction du gain optique.

5. Dispositif d'amplification d'un faisceau laser selon l'une des revendications précédentes, **caractérisé en ce que** l'angle $\alpha1$ est tel que $\sin\alpha1 < n_A/n_c$.

6. Dispositif d'amplification d'un faisceau laser selon l'une des revendications précédentes prise en combinaison avec la revendication 3, **caractérisé en ce que** l'angle $\alpha2$ est tel que :

$$\sin\alpha2 < n_A/n_c.$$

7. Dispositif d'amplification d'un faisceau laser selon l'une des précédentes prise en combinaison avec la revendication 3, **caractérisé en ce que** e1'=e2', $\alpha1$ =$\alpha2$, $\beta1$ =$\beta2$.

8. Dispositif d'amplification d'un faisceau laser selon l'une des revendications précédentes, **caractérisé en ce que** les faces d'entrée et de sortie sont circulaires et **en ce que** la (ou les) dent(s) présente(nt) une symétrie de révolution selon l'axe Ox.

9. Dispositif d'amplification d'un faisceau laser selon l'une des revendications 1 à 8, **caractérisé en ce que** la (ou les) dent(s) est (sont) réalisée(s) sur deux parties de la surface $\Sigma$, diamétralement opposées.

10. Dispositif d'amplification d'un faisceau laser selon l'une des revendications 1 à 8, **caractérisé en ce que** les faces d'entrée et de sortie sont rectangulaires et **en ce que** la (ou les) dent(s) est (sont) réalisée(s) sur deux parties de la surface $\Sigma$, situées selon deux côtés opposés du rectangle.

11. Dispositif d'amplification d'un faisceau laser selon l'une des revendications précédentes, **caractérisé en ce que** la structure de barreau amplificateur comprend un seul cristal ou un seul verre dopé.

12. Dispositif d'amplification d'un faisceau laser selon l'une des revendications 1 à 11, **caractérisé en ce que** la structure de barreau amplificateur comprend un cristal (1a, 1 b, 1 c) ou un verre dopé par dent (2).

13. Dispositif d'amplification d'un faisceau laser selon l'une des revendications 11 ou 12, **caractérisé en ce que** le cristal est du Ti :Saphir.

14. Procédé d'utilisation d'un dispositif d'amplification d'un faisceau laser selon l'une des revendications précédentes, **caractérisé en ce qu'**il comprend une étape de pompage du dispositif, et **en ce que** ce pompage induit une puissance thermique supérieure à 100 Watt moyens.

**Patentansprüche**

1. Vorrichtung zum Verstärken eines Laserstrahls entlang einer Achse Ox, die Folgendes umfasst:

- eine Verstärkungsstabstruktur (1) mit Index $n_c$, einer Fluoreszenzwellenlänge $\lambda$, die durch eine Oberfläche $\Sigma$ begrenzt wird, die die Eingangsfläche S1 und die Ausgangsfläche S2 der Verstärkungsstabstruktur verbindet und eine Abmessung e zwischen 2 cm und 5 cm in der Richtung Ox und eine Abmessung $\Phi$ in einer Richtung der Ebene Oyz lotrecht zu Ox hat, wobei e<$\Phi$ ist, und zum Pumpen entlang der Achse Ox ausgelegt ist, um zu einem Verstärkungsmedium mit Durchmesser D zentriert auf der Achse Ox zu werden, wobei die optische Verstärkung ein Maximum entlang einer Fläche S1 oder S2 der Verstärkungsstabstruktur hat, Fläche mit maximaler Verstärkung genannt, und
- eine Flüssigkeit (4) mit Index $n_A$, die die Verstärkungsstabstruktur (1) in Bezug auf ihre Oberfläche $\Sigma$ umgibt, wobei diese Flüssigkeit Wasser oder ein Wasser-Ethylenglykol-Gemisch ist,

**dadurch gekennzeichnet, dass** die Oberfläche $\Sigma$ einen ersten Zahn (2) in Form einer Schrägung über den ganzen oder einen Teil des Übergang(s) mit der maximalen Verstärkungsfläche umfasst, orientiert in einem Winkel $\alpha1$ zu Ox zwischen 30° und 50° und mit einer Länge e1' entlang der Achse Ox, wobei e1' größer als eine vorbestimmte Schwellenlänge und kleiner als e/6 ist, um zu vermeiden, dass parasitäres Querlasern verursacht wird, dadurch, dass die Flüssigkeit (4) mit Index $n_A$ eine Wärmekapazität von mehr als 3000 Joule pro Kilogramm pro Grad Kelvin hat, um die durch das Pumpen induzierte thermische Leistung abzuführen, dadurch, dass die Differenz zwischen $n_A$ und $n_c$ in der Größenordnung von 0,3 liegt und 0,43 erreichen kann, und dadurch, dass eine Dichte (5), die auf der Oberflächenwellenlänge $\lambda$ der Verstärkungsstabstruktur absorbiert, und/oder ein bei dieser Wellenlänge absorbierendes Element in die Flüssigkeit eingetaucht ist.

2. Vorrichtung zum Verstärken eines Laserstrahls nach dem vorherigen Anspruch, **dadurch gekennzeichnet, dass** die Oberfläche $\sum$ einen zweiten Zahn (2) mit zwei Flächen umfasst, wobei die zum ersten Zahn orientierte Fläche in einem Winkel $\beta1$ zur Achse Ox geneigt ist, wobei $\alpha1$ und $\beta1$ derart sind, dass die Photonen, die sich parallel zu der Fläche mit maximaler Verstärkung ausbreiten und vom ersten Zahn (2) reflektiert werden, lotrecht auf der Fläche des zweiten Zahns ankommen.

3. Vorrichtung zum Verstärken eines Laserstrahls nach dem vorherigen Anspruch, **dadurch gekennzeichnet, dass** das Verstärkungsmedium ein anderes Maximum entlang der anderen Fläche der Verstärkungsstabstruktur hat, und dadurch, dass die Oberfläche $\sum$ einen dritten Zahn (2) in Form einer anderen Schrägung über ihren gesamten oder einen Teil des Übergang(s) mit dieser anderen Fläche mit maximaler Verstärkung und über eine Länge e2' entlang der Achse Ox hat, wobei e2' größer ist als die vorbestimmte Schwellenlänge, wobei diese andere Schrägung in einem Winkel $\alpha2$ zu Ox orientiert ist, wobei die zweite Fläche des zweiten Zahns in einem Winkel $\beta2$ zur Achse Ox geneigt ist, wobei $\alpha2$ und $\beta2$ derart sind, dass die Photonen, die sich parallel zu dieser anderen Fläche mit maximaler Verstärkung ausbreiten und von dem dritten Zahn reflektiert werden, lotrecht auf dieser Fläche ankommen.

4. Vorrichtung zum Verstärken eines Laserstrahls nach einem der vorherigen Ansprüche, **dadurch gekennzeichnet, dass** die Schwellenlänge in Abhängigkeit von der optischen Verstärkung ermittelt wird.

5. Vorrichtung zum Verstärken eines Laserstrahls nach einem der vorherigen Ansprüche, **dadurch gekennzeichnet, dass** der Winkel $\alpha1$ derart ist, dass sin $\alpha1 < n_A/n_c$ ist.

6. Vorrichtung zum Verstärken eines Laserstrahls nach einem der vorherigen Ansprüche in Kombination mit Anspruch 3, **dadurch gekennzeichnet, dass** der Winkel $\alpha2$ derart ist, dass:

$$\sin\alpha2 < n_A/n_c.$$

7. Vorrichtung zum Verstärken eines Laserstrahls nach einem der vorherigen Ansprüche in Kombination mit Anspruch 3, **dadurch gekennzeichnet, dass** e1'=e2', $\alpha1=\alpha2$, $\beta1=\beta2$.

8. Vorrichtung zum Verstärken eines Laserstrahls nach einem der vorherigen Ansprüche, **dadurch gekennzeichnet, dass** die Ein- und die Ausgangsfläche kreisförmig sind, und dadurch, dass die ein oder mehreren Zähne eine Umdrehungssymmetrie entlang der Achse Ox haben.

9. Vorrichtung zum Verstärken eines Laserstrahls nach einem der Ansprüche 1 bis 8, **dadurch gekennzeichnet, dass** die ein oder mehreren Zähne auf zwei diametral gegenüberliegenden Teilen der Oberfläche $\sum$ vorgesehen sind.

10. Vorrichtung zum Verstärken eines Laserstrahls nach einem der Ansprüche 1 bis 8, **dadurch gekennzeichnet, dass** die Ein- und die Ausgangsfläche rechteckig sind, und dadurch, dass die ein oder mehreren Zähne auf zwei Teilen der Oberfläche $\sum$ vorgesehen sind, die sich entlang zwei gegenüberliegenden Seiten des Rechtecks befinden.

11. Vorrichtung zum Verstärken eines Laserstrahls nach einem der vorherigen Ansprüche, **dadurch gekennzeichnet, dass** die Verstärkungsstabstruktur einen einzigen Kristall oder ein einziges dotiertes Glas umfasst.

12. Vorrichtung zum Verstärken eines Laserstrahls nach einem der Ansprüche 1 bis 11, **dadurch gekennzeichnet, dass** die Verstärkungsstabstruktur einen Kristall (1a, 1b, 1c) oder ein dotiertes Glas pro Zahn (2) umfasst.

13. Vorrichtung zum Verstärken eines Laserstrahls nach Anspruch 11 oder 12, **dadurch gekennzeichnet, dass** der Kristall Ti:Saphir ist.

14. Verfahren zur Verwendung einer Vorrichtung zum Verstärken eines Laserstrahls nach einem der vorherigen Ansprüche, **dadurch gekennzeichnet, dass** es einen Schritt des Pumpens der Vorrichtung beinhaltet, und dadurch, dass das Pumpen eine thermische Leistung von mehr als im Mittel 100 Watt induziert.

## Claims

1. A device for amplifying a laser beam along an axis Ox, comprising:

- an amplifying bar structure (1) of index $n_c$, with a fluorescence wavelength $\lambda$, delimited by a sur-

face $\Sigma$ connecting the input S 1 and output S2 faces of said amplifying bar structure, and having a dimension e between 2 cm and 5 cm in the direction Ox, and a dimension $\Phi$ in a direction of the plane Oyz perpendicular to Ox, with e<$\Phi$, and being designed to be pumped along said axis Ox so as to become a gain medium of diameter D centred on said axis Ox, the optical gain having a maximum along a face S1 or S2 of said amplifying bar structure, referred to as maximum gain face, and
- a liquid (4) of index $n_A$ that surrounds the amplifying bar structure (1) in relation to its surface $\Sigma$, said liquid being water or a water-ethylene glycol mixture,

**characterised in that** said surface $\Sigma$ comprises a first tooth (2) in the form of a chamfer over all or part of its junction with said maximum gain face, oriented at an angle $\alpha 1$ between 30° and 50° relative to Ox, and having a length e1' located along said axis Ox, with e1' being greater than a predetermined threshold length and lower than e/6, so as to avoid causing parasitic transverse lasing, **in that** said liquid (4) of index $n_A$ has a calorific capacity of more than 3,000 Joules per kilogram per degree Kelvin so as to dissipate the thermal power induced by the pumping, **in that** the difference between $n_A$ and $n_c$ is of the order of 0.3 and can reach 0.43, and **in that** a density (5) that is absorbent at the fluorescence wavelength $\lambda$ of the amplifying bar structure and/or an element that is absorbent at this wavelength is immersed in said liquid.

2. The device for amplifying a laser beam according to the preceding claim, **characterised in that** said surface $\Sigma$ comprises a second tooth (2) with two faces, with the face oriented toward the first tooth being inclined at an angle $\beta 1$ relative to said axis Ox, with $\alpha 1$ and $\beta 1$ being such that the photons that propagate parallel to said maximum gain face and are reflected by said first tooth (2) arrive perpendicularly at said face of said second tooth.

3. The device for amplifying a laser beam according to the preceding claim, **characterised in that** said gain medium has another maximum along the other face of said amplifying bar structure and **in that** said surface $\Sigma$ has a third tooth (2) in the form of another chamfer over all or part of its junction with said other maximum gain face and over a length e2' located along said axis Ox, with e2' being greater than said predetermined threshold length, said other chamfer being oriented at an angle $\alpha 2$ relative to Ox, said second face of said second tooth being inclined at an angle $\beta 2$ relative to said axis Ox, with $\alpha 2$ and $\beta 2$ being such that the photons that propagate parallel to this other maximum gain surface and are reflected by said third tooth arrive perpendicularly at said face.

4. The device for amplifying a laser beam according to any one of the preceding claims, **characterised in that** the threshold length is determined as a function of the optical gain.

5. The device for amplifying a laser beam according to any one of the preceding claims, **characterised in that** the angle $\alpha 1$ is such that sin $\alpha 1 < n_A/n_c$.

6. The device for amplifying a laser beam according to any one of the preceding claims in combination with claim 3, **characterised in that** the angle $\alpha 2$ is such that:

$$\sin\alpha 2 < n_A/n_c.$$

7. The device for amplifying a laser beam according to any one of the preceding claims in combination with claim 3, **characterised in that** e1'=e2', $\alpha 1 = \alpha 2$, $\beta 1 = \beta 2$.

8. The device for amplifying a laser beam according to any one of the preceding claims, **characterised in that** said input and output faces are circular and **in that** the one or more teeth have a symmetry of revolution along said axis Ox.

9. The device for amplifying a laser beam according to any one of claims 1 to 8, **characterised in that** the one or more teeth are realised on two diametrically opposed parts of said surface $\Sigma$.

10. The device for amplifying a laser beam according to any one of claims 1 to 8, **characterised in that** said input and output faces are rectangular and **in that** the one or more teeth are realised on two parts of said surface $\Sigma$ that are located along two opposite sides of the rectangle.

11. The device for amplifying a laser beam according to any one of the preceding claims, **characterised in that** said amplifying bar structure comprises a single crystal or a single doped glass.

12. The device for amplifying a laser beam according to any one of claims 1 to 11, **characterised in that** said amplifying bar structure comprises one crystal (1a, 1b, 1c) or one doped glass per tooth (2).

13. The device for amplifying a laser beam according to claim 11 or 12, **characterised in that** said crystal is Ti:Sapphire.

14. A method for using a device for amplifying a laser beam according to any one of the preceding claims, **characterised in that** it comprises a step of pumping said device and **in that** said pumping induces a thermal power of more than 100 Watts mean.

gain transverse

**FIG.1**

**FIG.2**

Proportion réinjectée totale : R

FIG.3

Produit GxR

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2901067

- FR 2877776 A1

**Littérature non-brevet citée dans la description**

- Production of >1021 W/cm2 from a large-aperture Ti :sapphire laser system. **JD BONLIE et al.** Applied Physics B (Lasers and Optics). springer-verlag, Juin 2000, vol. B70

- **F.G.PATTERSON et al.** Suppression of parasitic lasing in large-aperture Ti:sapphire laser amplifiers. *Optics Letters,* 15 Juillet 1999, vol. 24 (14), 963-965